# EUROPÄISCHE PATENTSCHRIFT

(11) **EP 0 338 456 B1**
(45) Veröffentlichungstag und Bekanntmachung des Hinweises auf die Patenterteilung: **20.07.1994**
(21) Anmeldenummer: 89106743.1
(22) Anmeldetag: 14.04.1989
(51) Int. Cl.: G09F 3/02, G09F 3/10

(54) **Selbstklebeetikett und Druckverfahren**
Adhesive label and printing method
Etiquette adhésive et procédé d'impression

(30) Priorität: 20.04.1988 DE 3813303
(43) Veröffentlichungstag der Anmeldung: 25.10.1989
(73) Patentinhaber: SCHREINER ETIKETTEN UND SELBSTKLEBETECHNIK GMBH & CO., D-80995 München (DE)
(72) Erfinder: Schreiner, Helmut, D-8000 München 50 (DE)
(74) Vertreter: Kehl, Günther, Dipl.-Phys.

(56) Entgegenhaltungen:
- US-A- 4 180 929
- PATENT ABSTRACTS OF JAPAN, Band 12, Nr. 50 (C-476)[2897], 1. September 1987; & JP-A-62 197 482 (H. SAKASHITA)

## Beschreibung

Die Erfindung bezieht sich auf ein Selbstklebeetikett, das mit seiner klebstoffbeschichteten Seite vorübergehend auf einer klebstoffabweisenden Trägerfolie haftet und Markierungsmittel aufweist, die auf einem Gegenstand, auf dem das Etikett angebracht wird, dauerhafte Spuren hinterlassen.

Selbstklebeetiketten dieser Art sind allgemein gebräuchlich. Häufig werden Selbstklebeetiketten zum Teil aus unlauteren Motiven von den Gegenständen, auf denen Sie haften, entfernt. Erwähnt seien in diesem Zusammenhang lediglich beispielshalber Etiketten zur Kennzeichnung von Originalersatzteilen bei Kraftfahrzeugen oder Etiketten, die die Aufschrift "unverkälufliches Muster" tragen. Auch bei Waren mit berühmten Marken ist häufig zu beobachten, daß Etiketten entfernt werden und auf diese Weise dem Inhaber der berühmten Marke die Möglichkeit genommen wird, den Warenfluß zurückzuverfolgen und die Originalware von der Fälschung zu unterscheiden.

Aus PATENT ABSTRACT OF JAPAN (Band 12, Nr. 50 (C-476) (2897), 1. September 1987) & JP-A-62197482 ist ein Selbstklebeetikett der eingangs genannten Art bekannt. Das Markierungsmittel besteht bei dem bekannten Selbstklebeetikett aus einem Farbstoff, der in die Klebstoffmasse des Selbstklebeetiketts eingearbeitet worden ist. Wie aus der korrespondierenden, jedoch nachveröffentlichten US-A-4 841 652 hervorgeht, wird hierzu bereits bei der Klebstoffherstellung den Klebstoffbestandteilen ein Farbstoff zugemischt, bevor die Klebstoffmasse auf die Materialbahn für das Etikett aufgetragen wird.

Wenn das bekannte Etikett auf einem Gegenstand angebracht wird, diffundiert die Farbe aus der Klebstoffschicht in die Oberfläche des Gegenstandes und hinterläßt dort Farbspuren. Wegen der beschriebenen Herstellung des mit Farbstoff versetzten Klebstoffes ist praktisch nur ein vollflächiger Farbabdruck auf dem mit dem Etikett beklebten Gegenstand zu erzeugen. Das Anbringen von Mustern oder Nummer ist nicht möglich. Da des weiteren der Farbstoff in den Klebstoff eingemischt wird, verfärbt sich im Laufe der Zeit die Obermaterialbahn des Etiketts, in die der Farbstoff eindiffundiert. Um dies zu vermeiden, ist das Anbringen einer Sperrschicht erforderlich. Die Herstellung des Etiketts ist daher aufwendig.

Der Erfindung liegt die Aufgabe zugrunde, ein Selbstklebeetikett der eingangs genannten Art zu schaffen, das einfach herzustellen ist, und bei dem die auf dem Untergrund, auf dem es klebt, hinterlassenen Spuren ein beliebig geformtes Druckbild darstellen können.

Diese Aufgabe ist dadurch gelöst, daß die Markierungsmittel aus einer ein nichtflüchtiges Verdünnungsmittel enthaltenden nicht ausgehärteten Druckfarbe bestehen, die auf die klebstoffabweisende Trägerfolie oder auf die klebstoffbeschichtete Seite des Etiketts gedruckt ist.

Es hat sich überraschenderweise gezeigt, daß bei dem Bedrucken der Trägerfolie die Druckfarbe und somit das auf die Trägerfolie aufgebrachte Druckbild von der klebstoffbeschichteten Seite des Etiketts übernommen wird. Wird ein Etikett von der klebstoffabweisenden Trägerfolie, auf der es vorübergehend haftet, abgezogen, befindet sich das Druckbild auf der klebstoffbeschichteten Seite des Etiketts. Wird ein solches Etikett auf einem Gegenstand angebracht, so hat es sich überraschenderweise gezeigt, daß die Druckfarbe, die aufgrund der Verwendung des nichtflüchtigen Verdünnungsmittels "frisch" bleibt, im Laufe der Zeit in die Oberfläche des Gegenstandes, auf dem das Etikett haftet, eindiffundiert und dort praktisch unlöschbare Spuren hinterläßt. Auf diese Weise können beispielsweise "unverkäufliche Muster" exakt gekennzeichnet werden, ohne daß diese Kennzeichnung dem lauteren Verbraucher, der das entsprechende Etikett nicht entfernt, zur Kenntnis kommt. Auch Produktfälschungen lassen sich identifizieren, weil der Fälscher keine Kenntnis oder bei sich ändernden Kennzeichnungen keine laufende Kenntnis von dem unter dem Selbstklebeetikett gemäß der Erfindung angebrachten Aufdruck erlangt und er die Fälschungen nicht mit einem entsprechenden Aufdruck versehen kann.

Nach einer vorteilhaften Ausführungsform der Erfindung ist die Druckfarbe eine chemisch härtende Druckfarbe. Chemisch härtende Druckfarben enthalten nichtflüchtige Verdünnungsmittel und trocknen daher nicht aus. Sie bleiben über nahezu beliebig lange Zeit frisch, insbesondere dann, wenn sich die Druckfarbe geschützt zwischen dem Selbstklebeetikett und der Trägerfolie befindet, auf der das Selbstklebeetikett vorübergehend bis zu seinem Gebrauch haftet.

Unter den chemisch härtenden Druckfarben haben sich insbesondere UV-härtende Druckfarben als besonders vorteilhaft erwiesen.

Vorteilhaft ist ferner, wenn die UV-härtende Druckfarbe ein Acrylat-Monomer als Verdünnungsmittel enthält.

Acrylat-Monomere haben sich als besonders vorteilhaft erwiesen, da sie praktisch beliebig lange flüssig bleiben, sofern keine UV-Strahlung auf die Druckfarbe gelangt.

Als Druckfarbe wird des weiteren vorteilhafterweise eine solche Farbe verwendet, deren Farbmittel ein löslicher Farbstoff ist.

Insbesondere haben sich lasierende Druckfarben als besonders vorteilhaft erwiesen. Bei Farbmitteln mit löslichem Farbstoff und bei lasierenden Druckfarben kann die Druckfarbe nach dem Anbringen des Etiketts auf dem Objekt besonders effektiv in die Oberfläche des Objektes durch Diffusion eindringen. Es hat sich gezeigt, daß die Druckfarbe nach einer entsprechenden Einwirkdauer von einigen Tagen sogar in die harte Lackschicht einer Lackierung, wie beispielsweise einer Kraftfahrzeuglackierung, eindringen kann und dort praktisch unauslöschliche Farbspuren hinterläßt, die zur Identifizierung etwa von Kraftfahrzeugersatzteilen geeignet sind.

Dies gelingt in besonderem Maße, wenn - gemäß einer weiteren vorteilhaften Ausführungsform der Erfindung - der Farbstoff der Druckfarbe ein niedermolekularer Stoff ist.

Nach einer vorteilhaften Weiterbildung des Erfindungsgedankens kann das Selbstklebeetikett vorzüglich zum Bedrucken von Gegenständen (durch den Endverbraucher) verwendet werden. Die Erfindung bezieht sich somit auch auf ein Verfahren zum Bedrucken von Gegenständen unter Verwendung des Selbstklebeetiketts.

Das Anbringen von Beschriftungsetiketten auf Gegenständen ist manchmal nicht zufriedenstellend, weil die so angebrachten Beschriftungsetiketten wieder entfernt werden können.

Mit dem Druckverfahren gemäß der Erfindung sollen Beschriftungen und Bemalungen auf Gegenständen in einfacher Weise durch den Laien aufgedruckt werden können.

Diese Aufgabe ist dadurch gelöst, daß das Selbstklebeetikett von der Trägerfolie abgezogen, auf den zu bedruckenden Gegenstand aufgeklebt, dort über eine für die Eindiffusion der Druckfarbe in den zu bedruckenden Gegenstand ausreichenende Zeit belassen und danach von diesem entfernt wird.

Mit einem Druckverfahren gemäß der Erfindung können Beschriftungen auf nahezu allen Gegenständen in ästhetisch ansprechender Weise angebracht werden. Das Selbstklebeetikett muß zu diesem Zweck nur von der Trägerfolie abgezogen und auf dem zu bedruckenden Gegenstand aufgeklebt werden. Je nach der Oberflächenbeschaffenheit des zu bedruckenden Gegenstandes muß das Selbstklebeetikett einige Zeit auf diesem belassen werden, bevor es abgezogen wird. Bei Gegenständen mit poröser Oberfläche, wie beispielsweise Papier, genügt bereits ein kurzer Moment, um die Druckfarbe in den Gegenstand eindiffundieren zu lassen. Bei Gegenständen mit harten Oberflächen, wie beispielsweise Lackschichten oder dgl., kann es einige Tage dauern, bis eine ausreichende Eindiffusion erzielt ist. In jedem Fall ergibt sich jedoch eine dauerhafte, ästhetisch ansprechende Beschriftung oder Bemalung. Der Klebstoff des Selbstklebeetikettes kann ebenfalls an den Verwendungszweck angepaßt sein. Beim Bedrucken von Papier wird zweckmäßigerweise ein Klebstoff mit geringerer Klebkraft verwendet, so daß das Selbstklebeetikett nach dem Eindiffundieren der Druckfarbe in das Papier ohne Zerstörung wieder abgenommen werden kann.

Nach einer vorteilhaften Weiterbildung des Verfahrens wird die Druckfarbe nach dem Entfernen des Etiketts gehärtet. Dadurch wird sichergestellt, daß auch Teile der Druckfarbe, die nicht in den Gegenstand restlos eindiffundiert sind, ausgehärtet werden.

## Patentansprüche

1. Selbstklebeetikett, das mit seiner klebstoffbeschichteten Seite vorübergehend auf einer klebstoffabweisenden Trägerfolie haftet und Markierungsmittel aufweist, die auf einem Gegenstand, auf dem das Etikett angebracht wird, dauerhafte Spuren hinterlassen, dadurch gekennzeichnet, daß die Markierungsmittel aus einer ein nichtflüchtiges Verdünnungsmittel enthaltenden nicht ausgehärteten Druckfarbe bestehen, die auf die klebstoffabweisende Trägerfolie oder auf die klebstoffbeschichtete Seite des Etiketts gedruckt ist.

2. Selbstklebeetikett nach Anspruch 1, dadurch gekennzeichnet, daß die Druckfarbe eine chemisch härtende Druckfarbe ist.

3. Selbstklebeetikett nach Anspruch 1 oder 2, dadurch gekennzeichnet, daß die Druckfarbe eine UV-härtende Druckfarbe ist.

4. Selbstklebeetikett nach Anspruch 3, dadurch gekennzeichnet, daß das Verdünnungsmittel der Druckfarbe ein Acrylat-Monomer ist.

5. Selbstklebeetikett nach einem der Ansprüche 1 bis 4, dadurch gekennzeichnet, daß das Farbmittel der Druckfarbe ein löslicher Farbstoff ist.

6. Selbstklebeetikett nach einem der Ansprüche 1 bis 5, dadurch gekennzeichnet, daß die Druckfarbe lasierend ist.

7. Selbstklebeetikett nach einem der Ansprüche 1 bis 6, dadurch gekennzeichnet, daß der Farbstoff der Druckfarbe ein niedrig molekularer Farbstoff ist.

8. Verfahren zum Bedrucken von Gegenständen unter Verwendung des Selbstklebeetiketts nach einem der Ansprüche 1 bis 7, dadurch gekennzeichnet, daß das Selbstklebeetikett von der Trägerfolie abgezogen, auf den zu bedruckenden Gegenstand aufgeklebt, dort über eine für die Eindiffusion der Druckfarbe in den zu bedruckenden Gegenstand ausreichende Zeit belassen und danach von diesem entfernt wird.

9. Verfahren nach Anspruch 8, dadurch gekennzeichnet, daß die in den zu bedruckenden Gegenstand eindiffundierte Druckfarbe nach dem Entfernen des Etiketts gehärtet wird.

## Claims

1. Self-adhesive label whose adhesive coated side adheres temporarily to an adhesive-repellant carrier film and has marking means which leave permanent marks on an article to which the label is applied, characterised in that the marking means comprise a non-set printing ink which contains a non-volatile thinner and which is printed onto the adhesive-repellant carrier film or onto the adhesive-coated side of the label.

2. Self-adhesive label as claimed in Claim 1, characterised in that the printing ink is a chemically setting printing ink.

3. Self-adhesive label as claimed in Claim 1 or 2, characterised in that the printing ink is a UV-setting printing ink.

4. Self-adhesive label as claimed in Claim 3, characterised in that the thinner of the printing ink is an acrylate monomer.

5. Self-adhesive label as claimed in one of Claims 1 to 4, characterised in that the colouring agent of the printing ink is a soluble dye.

6. Self-adhesive label as claimed in one of Claims 1 to 5, characterised in that the printing ink is transparent.

7. Self-adhesive label as claimed in one of Claims 1 to 6, characterised in that the dye of the printing ink is a low molecular dye.

8. Method for printing on articles using the self-adhesive label as claimed in one of Claims 1 to 7, characterised in that the self-adhesive label is removed from the carrier film, adhered to the article to be printed, left there for a time sufficient for the diffusion of the printing ink into the article to be printed and thereafter removed from it.

9. Method as claimed in Claim 8, characterised in that the printing ink diffused into the article to be printed is cured after the removal of the label.

## Revendications

1. Etiquette autocollante, qui adhère avec son côté enduit de colle, provisoirement, sur une pellicule de support rejetant la colle, et présente des moyens de marquage, qui abandonnent des traces durables sur un objet, sur lequel l'étiquette est appliquée, caractérisée en ce que les moyens de marquage consistent en une couleur d'impression non durcie, contenant un agent de dilution non volatil, qui est imprimée sur la pellicule de support rejetant la colle ou sur le côté enduit de colle de l'étiquette.

2. Etiquette autocollante selon la revendication 1, caractérisée en ce que la couleur d'impression est une couleur d'impression durcissant chimiquement.

3. Etiquette autocollante selon la revendication 1 ou la revendication 2, caractérisée en ce que la couleur d'impression est une couleur d'impression durcissant aux UV.

4. Etiquette autocollante selon la revendication 3, caractérisée en ce que l'agent de dilution de la couleur d'impression est un monomère-acrylate.

5. Etiquette autocollante selon une des revendications 1 à 4, caractérisée en ce que le colorant de la couleur d'impression est une matière colorée soluble.

6. Etiquette autocollante selon une des revendications 1 à 5, caractérisée en ce que la couleur d'impression est glaçante.

7. Etiquette autocollante selon une des revendications 1 à 6, caractérisée en ce que la matière colorée de la couleur d'impression est une matière colorée de faible poids moléculaire.

8. Procédé pour l'impression d'objets avec emploi de l'étiquette autocollante selon une des revendications 1 à 7, caractérisé en ce que l'étiquette autocollante est retirée de la pellicule de support, collée sur l'objet à imprimer, là, laissée un temps suffisant pour la diffusion à l'intérieur de la couleur d'impression dans l'objet à imprimer et, après cela, enlevée de celui-ci.

9. Procédé selon la revendication 8, caractérisé en ce que la couleur d'impression diffusée à l'intérieur dans l'objet à imprimer est durcie après l'enlèvement de l'étiquette.
